Europäisches Patentamt

European Patent Office

Office européen des brevets

(11) Publication number: **0 165 745**
**A2**

(12) **EUROPEAN PATENT APPLICATION**

(21) Application number: **85304025.1**

(22) Date of filing: **06.06.85**

(51) Int. Cl.⁴: **G 01 N 3/56**
G 01 N 3/58, G 01 M 13/00

(30) Priority: **18.06.84 US 621834**

(43) Date of publication of application:
**27.12.85 Bulletin 85/52**

(84) Designated Contracting States:
**CH DE FR GB IT LI SE**

(71) Applicant: **BORG-WARNER CORPORATION**
**200 South Michigan Avenue**
**Chicago Illinois 60604(US)**

(72) Inventor: **Fildes, John Michael**
**5537 Pebble Beach Drive**
**Hanover Park Illinois 60103(US)**

(72) Inventor: **Krueger, Robert Harold**
**1125 Skylark Drive**
**Palatine Illinois 60067(US)**

(74) Representative: **Williams, Trevor John et al,**
**J.A. KEMP & CO. 14 South Square Gray's Inn**
**London WC1R 5EU(GB)**

(54) **Cutting tool wear monitor.**

(57) A method and apparatus by which the degree of wear and useful life limitations of a drill, end mill or other types of boring or turning tools can be detected. The method is based on the short circuit current, open circuit voltage and/or power that is generated during drilling, boring, etc. by the utilization of an insulated rotary tool bit (17) to which electrical contact is made by a non-rotating conductor (37,39) and an insulated or non-insulated workpiece, with an external circuit (41,42) connecting the tool and workpiece (11) through a measuring device (43). The generated current, voltage or power shows a sharp increase or change in slope upon considerable tool wear or failure.

EP 0 165 745 A2

./...

Croydon Printing Company Ltd.

Fig.1

## CUTTING TOOL WEAR MONITOR

### Description

Tool wear has an important bearing on the performance of metal cutting operations, where worn tools may result in scrapped workpieces due to unacceptable surface finish, out of tolerance dimensions, or damage caused by tool breakage. For these reasons, it has become common practice in machining operations to replace a cutting tool long before the end of its useful life, resulting in poor utilization of tools. Thus, there is the need for an effective method of measuring the amount of wear on a tool while cutting is in operation. At the present time, an acceptable tool wear sensing technology does not appear to exist.

Technologies have been and are being explored for monitoring cutting tool wear based on fundamental features and phenomena of wear and failure mechanisms that have been observed during cutting operations. Briefly, three distinct failure mechanisms have been identified:

1. Gross plastic deformation caused by excessively elevated temperatures.

2. Fatigue caused by excessively large cutting forces.

3. Gradual wear caused by the processes of adhesion, abrasion, electrochemical conversion and atomic diffusion.

The wear and failure mechanism that occurs in a specific situation depends on the cutting forces, temperature, and the tool and workpiece materials (e.g. composition, grain structure, surface composition). The variety of wear and failure mechanisms have resulted in various modes of testing and monitoring.

One such measurement involves the dimensional changes of the cutting tool or workpiece. This class of techniques includes mechanical gauging, profile tracers, weighing, ultrasonics, optical comparator methods and radiotracer methods. Except for radiotracer methods, all of these techniques are off-line measurements that frequently miss detection of the approach to failure. Also, radioactive methods are slow and perceived as unsafe.

The relationship between cutting forces and tool wear have been actively explored over the last twenty-five years, but a general correlation has not been established. For example, progressive flank wear produces increasing forces whereas progressive crater wear has the opposite effect. The observed forces also depend on material hardness, depth of cut and cutting speed. These techniques are hard to implement; requiring careful placement of strain gauges or dynomometers. Transducers frequently have to be incorporated into the original design of the machine.

Measurement of power consumption by the spindle or feed motor of a machining tool is easy to implement on new or existing machines. Such techniques have the potential of providing real-time optimization of metal removal rates, but serious disadvantages are inherent in these methods. Wear produces very small changes in power consumption which must be detected as a perturbation of a much larger signal (e.g. the overall power consumption of the motor). These methods are sensitive to non-wear related factors. Progressive wear of the tool increases power consumption but plastic deformation of the tool at high temperature decreases power consumption.

The bulk temperature of a tool can be measured by an embedded thermocouple or infrared technique. Infrared measurement has the disadvantage of requiring a very clean environment not found on a machine production floor, while embedded thermocouples require extensive redesign of a machine's spindle. The rise in the bulk temperature of the tool, caused by wear, is very small and the signal to noise ratio is poor.

Currently, vibration and sound analysis are active research areas, possibly because of the successful application of these methods to the study of rotating machinery and crack propagation in ceramics. The results of such analysis are very specific to a particular set-up and hard to generalize, and the techniques are difficult to implement, expensive and difficult to utilize. Therefore, a number of different techniques have been tried over the years with little success in the predictability of excess tool wear and/or failure. The present invention overcomes the deficiencies of previous techniques to provide an effective tool wear monitoring technique.

The present invention comprehends the provision of a novel method for monitoring wear of a rotating cutting tool based on short circuit current, open circuit voltage and/or power generated during the cutting operation on a workpiece. As the tool wears, the generated current, voltage or power gradually increases until a generally sharp increase signifies failure of the tool due to excessive wear or breakage.

The present invention also comprehends the provision of an apparatus for monitoring tool wear in a drilling, milling or other turning operation where the electrical resistance along a path from the tool to the measuring circuit input to the workpiece must be much less than any other potential electrical path. Depending on the machine tool, both tool and workpiece might need to be insulated, neither might require insulation, or one, but not both, might require insulation. A non-rotating contact for the tool cna be utilized where it provides low electrical resistance.

Further objects are to provide a construction of maximum simplicity, efficiency, economy and ease of assembly and operation, and such further objects, advantages, and capabilities as will later more fully appear and are inherently possessed thereby.

Figure 1 is a combined schematic and sectional showing of the cutting tool wear monitoring apparatus applied to a drilling machine tool.

Figure 2 is a graph showing generated current versus the number of holes drilled for a dry high speed tool steel bit.

Figure 3 is a graph similar to Figure 2 except for a dry oxide coated high speed tool steel bit.

Figure 4 is a graph similar to Figure 2, but for large hole drilling.

Figure 5 is a graph similar to Figure 2, but for deep hole drilling.

Figure 6 is a graph illustrating average current versus time of milling for the tool in an end milling operation.

Figure 7 is a graph similar to Figure 6, but showing average voltage versus time of milling.

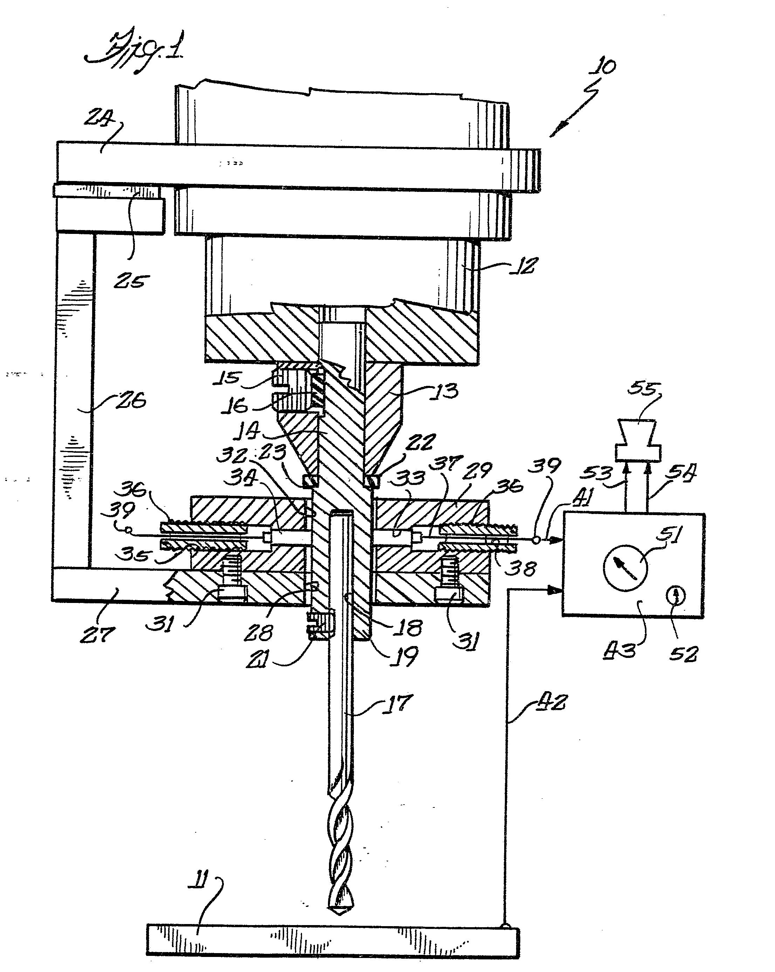

Referring more particularly to the disclosure in the drawings wherein is shown an illustrative embodiment of the present invention, Figure 1 discloses a machine tool 10 utilized for the drilling of holes in a workpiece 11 wherein the machine includes a machine head 12 having a rotating collet 13 mounted therein for rotation by a motor (not shown). A collet insert or drill holder 14 may have a shrink plastic tubing thereon to insulate the holder from the collet 13; a set screw 15 and insulator 16 being mounted in the collet to further secure the holder therein. A drill 17 is received in a blind passage 18 in the lower end 19 of the holder and a set screw 21 retains the drill therein for rotation by the machine. An insulating washer 22 encompasses the holder 14 between the end of the collet 13 and a shoulder 23 on the holder.

Mounted on the machine head 12 is a platform 24 having a depending bracket 26 secured thereto and insulated therefrom by an insulator 25. A horizontal arm 27 on the bracket 26 extends laterally to the axis of the holder 14 and has an opening 28 therethrough through which the drill holder projects. An annular phenolic brush holder 29 is secured to the arm 27 by retaining screws 31 and has a central opening 32 axially aligned with the opening 28 in the arm. The holder 29 has a plurality of circumferentially spaced radially extending passages 33, each passage receiving a brush assembly 34 that is in electrical contact with the lower portion 19 of the drill holder 14. Each passage 33 has an enlarged threaded outer portion 35 to receive a nylon brush retainer screw 36. A lead 37 extends through a central opening 38 in each screw 36 and is connected to the outer end of the brush assembly 34, the opposite end of each lead terminating in a brush connector ring 39.

All of the connector rings 39 are connected to a lead 41, and a second lead 42 is connected to the workpiece; with the leads 41 and 42 being connected to a suitable measuring device 43 having a circuit that will provide measurement of voltage, current and/or power. This device would also have predictive functions from a generated signal. The device 43 receiving the leads 41,42 includes an indicator dial 51 showing the level of the generated current, voltage and/or power and a knob 52 is provided to adjust the level of current at which a signal will be passed through leads 53,54 to an indicating means 55 to indicate that the tool has reached a condition approaching failure. The means 55 is shown as a speaker to provide an audible signal to the machine operator, although a visual signal, such as a signal light would also be appropriate. In the alternative, the signal that is emitted from the device 43 could result in an automatic shut-down of the tool without intervention by the operator.

For the predictive functions, a means of monitoring the machining time will have to be included in the device 43. The method of measuring the current and/or voltage may also be important. For instances that produce uniform wear of all cutting edges of the tool, a measurement of the average voltage and/or current is sufficient. However, where uniform wear is not produced on all of the cutting edges, average measurements may not be sufficient, and measurement of the voltage and/or current generated by each cutting edge may be required. This could be performed by very rapid data acquisition that is synchronized with the rotational frequency of the edges. An easier alternative might be the rapid collection of a set of non-synchronized measurements; wherein some measurements in the set will have contributions from more than one cutting edge, but some of the measurements will have a predominant contribution from a single edge. As increased wear generates larger voltages and currents, the largest value in the set of measurements, therefore, should have come from the most worn edge.

Although the tool 17 and workpiece 11 are shown as requiring insulation, the important factor to be considered is that the electrical resistance along a path from the tool 17 to the measuring circuit input to the workpiece must be less (e.g. 100 or more times less) than any other potential electrical path. Depending upon the machine tool, especially the electrical resistance of the spindle bearings, both tool and workpiece may need to be insulated, neither may need insulation, or one, but not both, may need to be insulated. Obviously, it is preferable not to have to insulate either one.

The design of the rotating contact for the tool or tool holder requires only that it provides low electrical resistance and little reduction of the rigidity of the tool/tool holder system. Although shown as a plurality of brushes 34 in a non-rotating ring or holder 29, a mercury slip ring or other suitable structure could also be used.

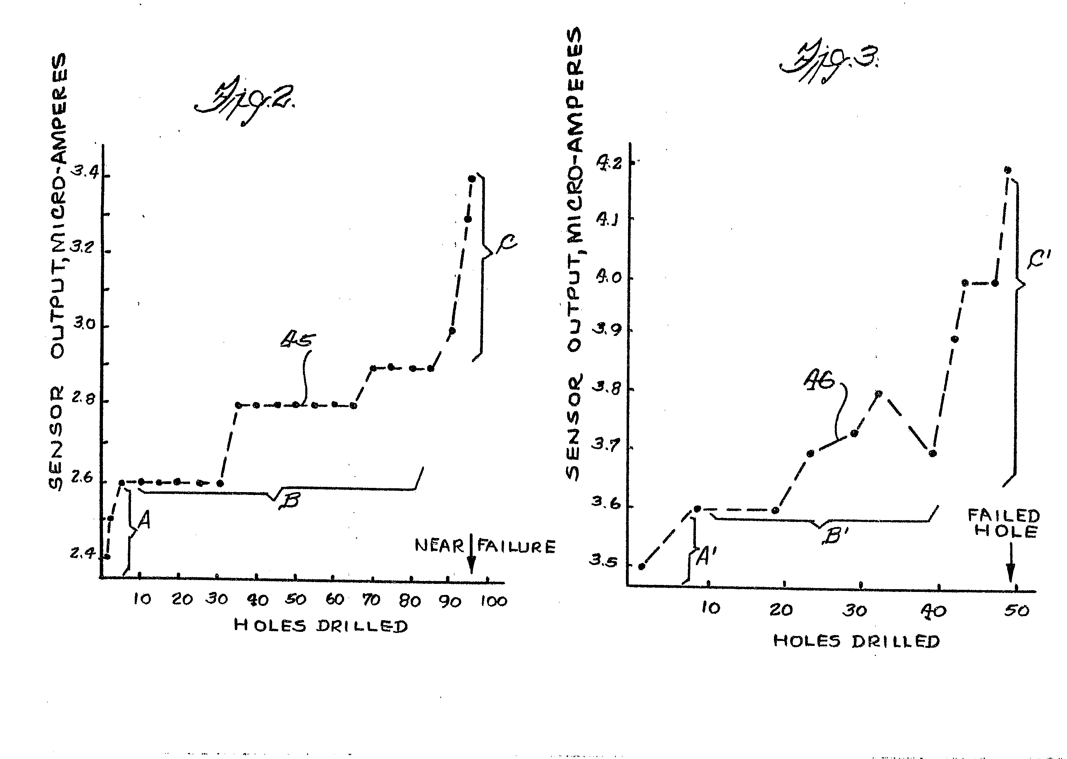

A characteristic curve for a drilling operation is shown in the graph of Figure 2 where the generated current is plotted versus the number of holes drilled by a high speed tool steel bit in the dry drilling of 01 tool steel workpieces. The curve 45 has an initial steep slope A which then generally levels off in area B and finally reaches a steep incline C at the point of near tool failure. The drill had a 0.25 inch bit rotated at a speed of 1150 rpm with a feed of 0.006 inch per revolution and a depth of 0.375 inch. The current amplitude at the onset of failure increases by 50 to 100% compared to the average current level over the B area of the graph.

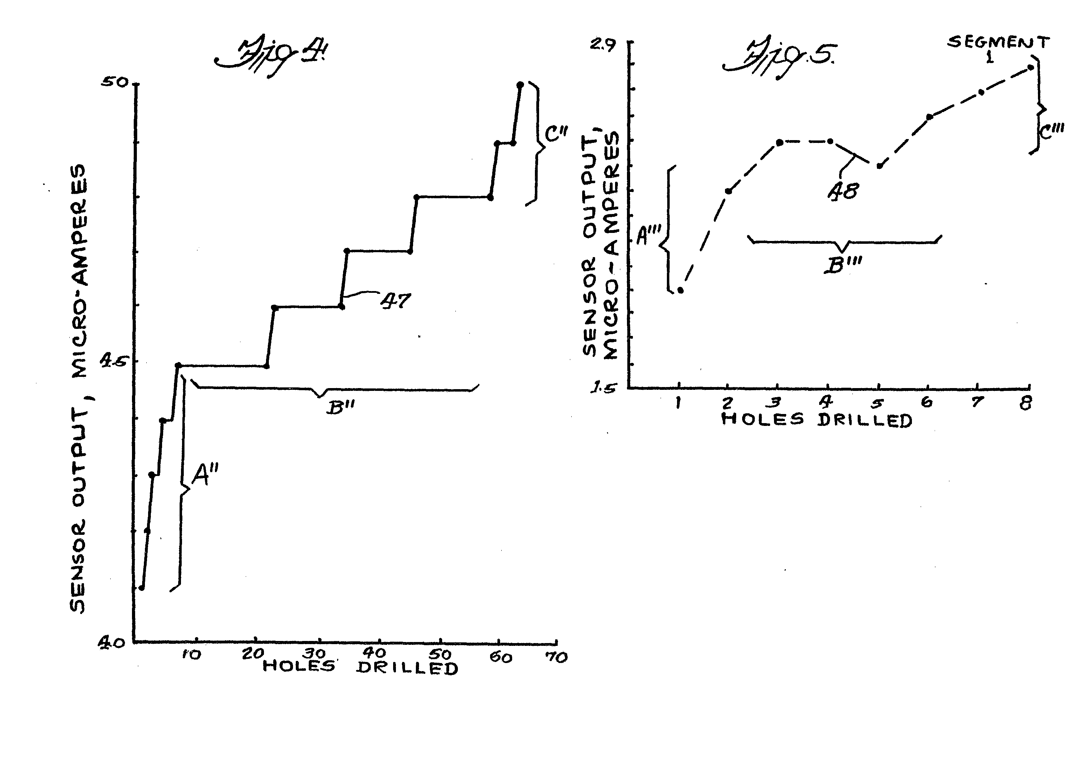

Figure 3 shows an illustrative graph for the dry drilling of an 01 tool steel workpiece with an oxide coated high speed tool steel bit. Here again, an initial steep incline A' of curve 46 is followed by a generally lateral line B' and finally a sharp incline C' to failure. Similar results are obtained in dry drilling of steel utilizing an oxide coated tool steel bit, and similar results occur with the drilling of stainless steel.

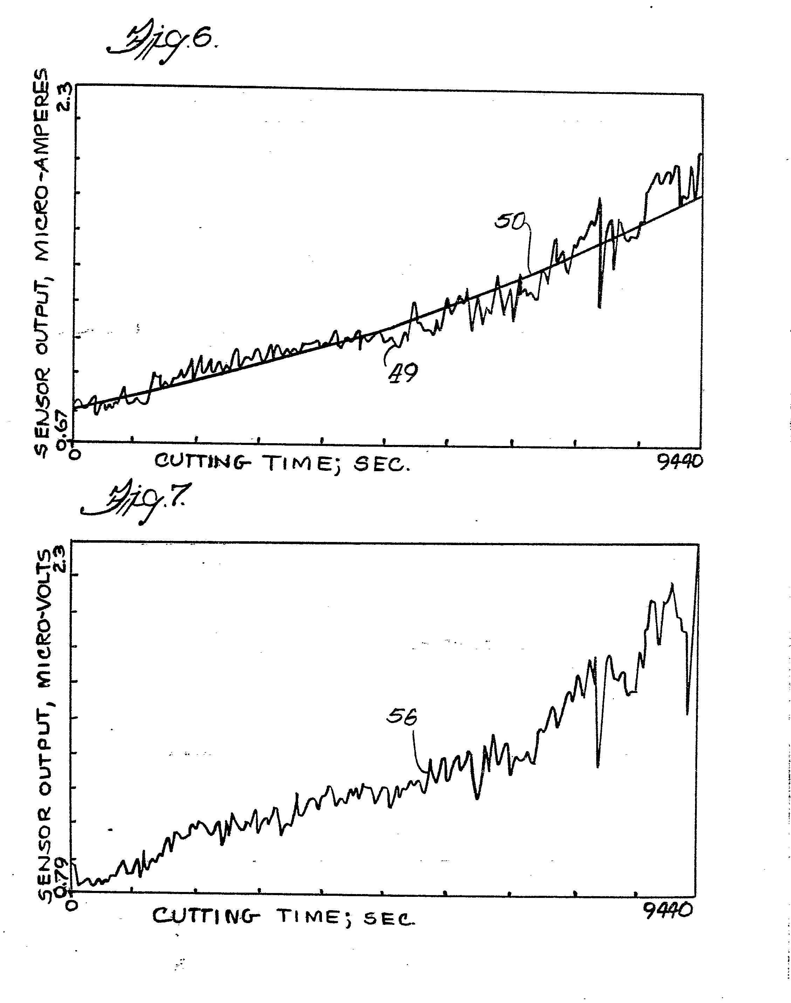

Figure 4 illustrates a graph for a large hole drilling operation using a 0.75 inch high speed tool steel bit on a 01 tool steel workpiece at 800 rpm for a hole depth of 0.375 inch with a feed of 0.003 inch per revolution. Here again there is an initial steep incline A" of curve 47, a lateral stepped area B" and a final steep incline C" to approximate tool failure.

Figure 5 shows a graph illustrating generated current versus the number of holes drilled to a constant depth for deep hole drilling. A 0.25 inch oxide coated tool bit is rotated 800 rpm and fed at 0.003 inch per revolution acting on a 01 tool steel workpiece for a depth of 2.0 inch. As seen the initial incline A''' of curve 48 and final incline C''' are not as steep as those for shallower holes, but the final incline appears to be predictable of tool failure.

All of the previous graphs illustrated the detection of catastrophic tool failure by a slope change of the current, however, a specific degree of wear can be detected by comparison of the observed current, voltage or power to a reference value. Furthermore, the remaining life of the tool can be predicted from the observed current, voltage or power by use of a reference equation that relates the observed signal to the machining time. The form of this equation is typically

$$t_{failure} = \frac{bt}{Ln \ (I \ or \ V \ or \ P) - Ln(a)}$$

where I is the observed current, V is the voltage, P is the power, t is the machining time at which the electrical parameter was observed, t failure is the predicted time of tool failure and a and b are constants that depend on the nature of the machining operation.

Figure 6 illustrates a characteristic curve 49 for a milling operation utilizing a 0.25 inch high speed tool steel cutter or bit on a 01 tool steel workpiece where the bit operates at 600 rpm with a feed of 0.5 inches per minute and a 0.03 inch depth of cut. The curve 50 superimposed over the curve 49 for the current generated is derived from the following general equation:

$$I = a \ exp \left( b \ \frac{t}{t_{failure}} \right)$$

which equation is a more general form of the first equation for predicting tool failure. The curve 49 generally follows the curve derived from the last equation until a larger deviation is noted when the wear of the tool becomes greater and approaches tool failure.

Figure 7 is a similar curve 56 where the voltage is plotted against the elapsed time of the milling operation. This curve 56 generally corresponds to the curve 49 in Figure 6.

Similarly, tool failure can be predicted for a turning operation based on measurement of the amplitude of the direct current generated during metal removal. A lubricated cutter tool works as well as a dry cutting tool for the monitoring operation.

## CLAIMS

1. A method of monitoring cutting tool wear and incipient failure comprising the steps of monitoring a short circuit current, open circuit voltage or power generated by a cutting tool (17) acting on a workpiece (11) during a cutting operation, and comparing the current, voltage or power generated and determining a sharp increase in slope thereof versus the articles cut indicative of tool failure.

2. A method of monitoring cutting tool wear as set forth in Claim 1, including the step of insulating the cutting tool from the turning machine therefor.

3. A method of monitoring cutting tool wear as set forth in Claim 1, wherein tool failure occurs upon a 50 to 100% increase in generated current over the average current during the cutting life of the tool.

4. A method of monitoring cutting tool wear as set forth in Claim 1, including the step of monitoring the machining time for cutting operations to provide a predictive function of tool wear.

5. A method of monitoring cutting tool wear as set forth in Claim 4, in which failure of said tool is predicted according to the following equation:

$$t_{failure} = \frac{bt}{Ln \ (I \ or \ V \ or \ P)-Ln(a)}$$

wherein t$_{failure}$ is the time of tool failure in seconds,

t is the elapsed cutting time for the tool in seconds,

I is the observed current in microamperes, V is the observed voltage in microvolts, P is the observed power in microwatts, and a and b are constants depending on the machining operation.

6. Apparatus for monitoring cutting tool wear comprising a machine (10) for rotating a shaft, a collet (13) rotated by said machine, a tool holder (14) secured in said collet, a rotary tool bit (17) secured in said holder, a non-rotating holder (29) having a central opening (32) through which said tool bit projects, and a circuit (41,42) between means contacting said holder and means contacting said workpiece to measure the current, voltage or power generated by metal removal by said tool bit acting on said workpiece.

7. Apparatus for monitoring cutting tool wear as set forth in Claim 6, wherein said contact means for the tool holder comprises a plurality of brush assemblies (34) retained in said holder and in electrical contact with the circuit including means (51) for measuring the generated current.

8. Apparatus for monitoring cutting tool wear as set forth in Claim 7, wherein said holder (14) is mounted on and insulated from a bracket (26,27) which in turn is mounted on and insulated from said machine (10).

9. Apparatus for monitoring cutting tool wear as set forth in Claim 8, in which said workpiece (11) is grounded.

10. Apparatus for monitoring cutting tool wear as set forth in Claim 8, wherein said workpiece is insulated from said machine.

11. Apparatus for monitoring cutting tool wear as set forth in Claim 7, wherein said tool bit is a drill bit (17).

12. Apparatus for monitoring cutting tool wear as set forth in Claim 7, wherein said tool bit is an end mill.

13. Apparatus for monitoring cutting tool wear as set forth in Claim 6, wherein the electrical resistance along a path from the tool (17) to the measuring circuit (41,42) and to the workpiece (11) is much less than any other potential electrical path.

14. Apparatus for monitoring cutting tool wear as set forth in Claim 7, wherein said machine is for turning metal workpieces.

15. Apparatus for monitoring cutting tool wear as set forth in Claim 7, wherein said circuit includes a lead (41) from said brush assemblies (34), a lead (42) from said workpiece, and a measuring device (43) connected to said leads.

16. Apparatus for monitoring cutting tool wear, comprising a cutting tool (17), a workpiece (11), a machine (10) for rotating the cutting tool, and circuit means (41,42), coupled to the cutting tool (17) and to said workpiece, to measure the current generated by metal removal by said cutting tool acting on said workpiece.

17. Apparatus for monitoring cutting tool wear as set forth in Claim 16, in which the circuit means includes means for providing an indication when the amplitude of the current generated exceeds a preset level.

18. Apparatus for monitoring cutting tool wear as set forth in Claim 17, in which the circuit means includes means for adjusting the preset current level.

19. Apparatus for monitoring cutting tool wear as set forth in Claim 16, wherein said circuit means includes means for predicting the time of tool failure based on the current generated at a particular elapsed time of cutting for the tool.

Fig. 1

Fig. 2.

Fig. 3.

2 / 4

0165745

Fig 4.

Fig. 5.

SENSOR OUTPUT, MICRO-AMPERES

HOLES DRILLED

SEGMENT 1

3/4

0165745

Fig.6.

Fig.7.